# EUROPÄISCHE PATENTSCHRIFT

(11) **EP 1 785 251 B1**
(45) Veröffentlichungstag und Bekanntmachung des Hinweises auf die Patenterteilung: **27.08.2008**
(21) Anmeldenummer: 06022560.4
(22) Anmeldetag: 28.10.2006
(51) Int. Cl.: B29C 33/62, B01F 17/00

(54) **Wässriges Trennmittel und seine Verwendung bei der Herstellung von Polyurethan-Formkörpern**
Aqueous realeasing agent and its use for producing moulded polyurethane articles
Agent de démoulage à base d'eau et son utilisation pour la fabrication de polyuréthane moulé

(30) Priorität: 12.11.2005 DE 102005054033
(43) Veröffentlichungstag der Anmeldung: 16.05.2007
(73) Patentinhaber: Evonik Goldschmidt GmbH, 45127 Essen (DE)
(72) Erfinder: Althoff, Ralf, 45721 Haltern (DE); Henning, Torsten, Dr., 19057 Schwerin (DE); Lammerting, Helmut, 58456 Witten (DE)

(56) Entgegenhaltungen:
- DE-A1- 4 020 036
- DE-C1- 19 738 192
- US-A- 3 872 038

## Beschreibung

Die Erfindung betrifft wässrige Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen, aufgebracht werden.

Solche Trennmittel bestehen aus Dispersionen oder Emulsionen von Wachsen, Seifen, Ölen und/oder Siliconen in Lösungsmitteln wie Kohlenwasserstoffen oder Wasser.

Nach Aufbringen des Trennmittels auf die Form verdampft das Lösungsmittel und die nichtflüchtigen trennaktiven Substanzen bilden einen dünnen Trennfilm, der gewährleisten soll, dass der Polyurethan-Formkörper nach der Herstellung leicht aus der Form entnommen werden kann.

Neben der eigentlich benötigten Trennwirkung übernimmt das Trennmittel noch weitere Funktionen, so beeinflusst es auch sehr stark die Oberfläche des Polyurethan-Formkörpers, die feinporig bzw. glatt und gleichmäßig sein soll, unter anderem auch, um eine gute Beziehbarkeit der fertigen Formteile mit Stoffen oder Leder zu gewährleisten.

Um die Umweltbelastung mit organischem Material zu reduzieren, besteht ein hohes Interesse an Trennmitteln auf wässriger Basis, die frei von flüchtigem organischem Material sind. Die im Markt befindlichen wässrigen Trennmittel zeigen jedoch gegenüber klassischen, organische Lösungsmittel enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 bis 80 °C, bevorzugt 50 bis 75 °C, nicht verflüchtigt und mit den Isocyanatverbindungen des Polyurethansystems Reaktionen eingeht, die zu sehr harten Polyharnstoffverbindungen führen. Dadurch werden die Formoberflächen gestört. Sie erhalten einen so genannten Aufbau von dem sie aufwändig gereinigt werden müssen.

Typische Beispiele wässriger Trennmittel mit guter Entformungswirkung sind beispielsweise beschrieben in DE-A-37 42 370 oder DE-A-40 20 036. Diese Mittel enthalten als trennwirksame Substanz ungesättigte oligomere oder polymere Kohlenwasserstoffe mit Molekulargewichten von mindestens 500 und Jodzahlen von mindestens 60, besonders bevorzugt flüssiges Polybutadien mit Molekulargewichten von ca. 3.000 und Jodzahlen von ca. 450.

Insbesondere nachteilig bei diesen Trennmitteln sind die auftretenden starken Verfärbungen, die durch Oxidation der Doppelbindungen hervorgerufen werden.

Ein weiteres Problem der oben zitierten Trennmittel ist das häufige Auftreten von Allergien bei Mitarbeitern, die mit diesen Trennmitteln oder den mit ihrer Hilfe hergestellten Formteilen arbeiten.

Diese Trennmittel zeigen neben dem oben beschriebenen Problem des Polyharnstoffaufbaus auf den Formoberflächen aber noch den weiteren Nachteil, dass die als zähfließendes Öl vorliegende trennwirksame Substanz die Arbeitsumgebung stark verschmutzt. Auf Maschinen und Anlagen bildet sich ein schlecht zu entfernender, klebriger Schmierfilm aus; auch bei großer Sorgfalt ist die Beschmutzung der Umgebung nicht mit Sicherheit zu vermeiden, so dass sich beispielsweise auf den Fußböden ein schlecht zu entfernender, rutschiger Schmierfilm ausbildet, der für die Mitarbeiter ein nicht akzeptables Gefahrenpotential bildet.

Durch die in den ungesättigten polymeren Kohlenwasserstoffen vorhandenen Doppelbindungen kann dieser Schmierfilm auch noch weiter reagieren, beispielsweise zu harzigen, klebrigen Schichten, die mit herkömmlichen Reinigungsmitteln kaum noch zu entfernen sind.

Aufgabe der vorliegenden Erfindung war es daher, wässrige Formtrennmittel zu finden, die frei sind von organischen Lösungsmitteln, die eine gute Trennwirkung zeigen, die Oberflächen der Polyurethan-Formkörper günstig beeinflussen, also feinporig, gleichmäßig und glatt hinterlassen, keinen Polyharnstoffaufbau auf den Formoberflächen hinterlassen, die Arbeitsumgebung nicht mit einem Schmierfilm verschmutzen und ein niedriges Allergiepotential haben.

Überraschenderweise wurde nun gefunden, dass eine wässrige Dispersion klassischer trennaktiver Substanzen wie Wachse, Seifen, Öle und/oder Silicone in Mengen von 0,5 bis 40 Gew.-%, bevorzugt 3 bis 20 Gew.-%, in Kombination mit Polyisobutylen in Mengen von 0,1 bis 15 Gew.-%, bevorzugt 0,5 bis 10 Gew.-%, bezogen auf die wässrige Gesamtformulierung, diese Aufgabe erfüllt.

Bevorzugt wird flüssiges Polyisobutylen der Molmasse 200 bis 3.000, insbesondere 300 bis 1.500 eingesetzt.

Polyisobutlyen wird beispielsweise unter den Markennamen Dynapak^{®} Poly, Hersteller Univar, oder Glissopal^{®} V, Hersteller BASF, angeboten.

Ein Gegenstand der Erfindung sind daher wässrige Dispersionen, enthaltend im Wesentlichen Wasser, trennaktive Mittel und Emulgatoren, welche dadurch gekennzeichnet sind, dass als trennaktive Mittel eine Kombination aus
A) mindestens eines trennaktiven Mittels ausgesucht aus der Gruppe Seifen, Öle, Wachse und Siliconen und
B) Polyisobutylen
verwendet wird.

Ein weiterer Gegenstand der Erfindung sind daher wässrige Dispersionen, enthaltend trennaktive Mittel, Emulgatoren und übliche Hilfs- und Zusatzmittel, welche dadurch gekennzeichnet sind, dass sie aus einer Kombination aus
A) 0,5 bis 40 Gew.-% mindestens eines trennaktiven Mittels ausgesucht aus der Gruppe Seifen, Öle, Wachse und Siliconen und
B) 0,1 bis 15 Gew.-% Polyisobutylen,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 5 Gew.-% Viskositätsmodifizierer,
G) 0,1 bis 2 Gew.-% übliche Konservierungsmittel, Bakterizide, Fungizide und Antioxidantien und
H) ad 100 Gew.-% Wasser
   bestehen.

Ein weiterer Gegenstand der Erfindung ist die Verwendung dieser Trennmittel bei der Herstellung von Polyurethan-Formkörpern.

Weitere Gegenstände der Erfindung sind durch die Ansprüche gekennzeichnet.

Die Verwendung von Polyisobutylen hat darüber hinaus die Vorteile, dass es sowohl in der Kosmetik als auch in der Lebensmittelindustrie zugelassen ist. Es wird beispielsweise als kosmetisches Öl oder auch als Bestandteil der Kaugummigrundmasse eingesetzt, so dass Kontaktallergien auszuschließen sind.

Als klassische trennaktive Substanzen mit mittleren Molmassen größer als 200, bevorzugt 500, können beispielsweise erfindungsgemäß mitverwendet werden:

Wachse, d. h. flüssige, feste, natürliche oder synthetische Wachse, auch oxidiert und/oder teilverseift, Ester von Carbonsäuren mit Alkoholen oder Fettalkoholen, Metallseifen, wie Alkali- oder Erdalkalimetallsalze von Fettsäuren, Öle, wie bei Raumtemperatur flüssige oder zähfließende Kohlenwasserstoffe, gegebenenfalls aber nicht bevorzugt, unter Mitverwendung ungesättigter oligomere und/oder polymerer Kohlenwasserstoffe, Silicone, wie Polydimethylsiloxane, gegebenenfalls substituiert mit aliphatischen oder aromatischen Kohlenwasserstoffresten.

Als übliche Hilfs- und Zusatzstoffe können ein oder mehrere Verbindungen ausgesucht aus der Gruppe
I) Emulgatoren:
   anionische Emulgatoren wie Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren wie ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside die in Mengen von 0,1 bis 10 Gew.-%, bevorzugt 0,5 bis 6 Gew.-% mitverwendet werden;
II) Katalysatoren:
   solche, die typischerweise für die Polyurethanreaktion verwendet werden. Beispielsweise Lewis Säuren wie Zinnverbindungen oder Lewis Basen wie tertiäre Amine;
III) Schaumstabilisatoren:
   Polysiloxan-Polyether-Copolymerisate;
IV) Viskositätsmodifizierer:
typische Verdicker wie als Carbomere bezeichnete Polyacrylsäurederivate oder andere Polyelektrolytverdicker wie wasserlösliche Cellulosederivate oder auch Xanthan Gum. Als Viskositätsmodifizierer in wässrigen Formulierungen können auch aliphatische Kohlenwasserstoffe gesehen werden also Benzinfraktionen, die die eingesetzten Wachse aufquellen und so einen verdickenden Effekt zeigen;
V) übliche Konservierungsmittel, Bakterizide, Fungizide und Antioxidantien.

Die erfindungsgemäßen Dispersion können nach den im Stand der Technik bekannten Verfahren hergestellt werden. Bevorzugt geht man so vor, dass der Emulgator mit trennaktiven Substanzen in geschmolzener Form (unterhalb der Siedetemperatur des Wassers) vorgelegt wird, scherkraftreich ein Teil des Wassers eingetragen wird, dann das restliche Wasser, enthaltend die weiteren Komponenten, scherkraftarm zugegeben wird.

Die Erfindung betrifft weiter die Verwendung der beschriebenen Trennmittel bei der Herstellung von Polyurethan-Formkörpern.

Klassischerweise wird die Form auf die gewünschte Formtemperatur von 45 bis 80 °C, bevorzugt 50 bis 75 °C, gebracht, mit Trennmittel eingesprüht, eine gewisse Zeit - je nach Wasseranteil ca. 1 bis 10 Minuten - gewartet, bis die größte Menge Wasser verdampft ist und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit geöffnet und das Formteil entformt.

### Beispiele:

Die folgenden Beispiele dienen zur näheren Beschreibung der Erfindung, ohne sie darauf einzuschränken.

### Liste der eingesetzten Substanzen:

- Dynapak^{®} Poly 55 = Polyisobutylen mit mittlerer Molmasse von 650, Hersteller: Univar,
- Dynapak^{®} Poly 190 = Polyisobutylen mit mittlerer Molmasse von 1.000, Hersteller: Univar,
- DC® 190 = Polyethersiloxan, Hersteller: Air Products,
- Polyol^{®} 130 = Polybutadien mit mittlerer Molmasse von ca. 3.000 und Iodzahl von ca. 450 g Jod/100 g, Hersteller: Degussa,
- Unithox^{®} 450 = ethoxylierter Alkohol mit mittlerer Molmasse ca. 900, enthaltend 50 Gew.-% Ethylenoxid entsprechend dem in Beispiel 1 aus DE-A-40 20 036 Verwendeten, Hersteller: Baker Petrolite,
- Fettamin - R-NH₂ mit R = C₁₂₋₂₂ gegebenenfalls verzweigter Alkylrest,
- Mikrowachs = handelsübliche Wachse mit einer Erstarrungstemperatur von 50 bis 90 °C,
- Polyethylenwachs = handelsübliche Wachse mit einer Erstarrungstemperatur von 50 bis 90 °C,
- Desmophen^{®} PU 21IK01 = Polyetherpolyol, Hersteller: Bayer,
- Tegoamin^{®} TA 33, Hersteller: Degussa,
- Tegoamin^{®} AS-1, Hersteller: Degussa,
- Tegostab^{®} EP-K-38 = organomodifiziertes Siloxan, Hersteller: Degussa,
- Suprasec^{®} 2412 = Diphenylmethan-4,4'-diisocyanat, Hersteller: Huntsman.

### Beispiel 1

### Trennmittel 1:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 3 Gew.-% Dynapak^{®} Poly 55, 1 Gew.-% DC^{®} 190, 88,98 Gew.-% Wasser.

### Beispiel 2

### Trennmittel 2:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 10 Gew.-% Dynapak^{®} Poly 55, 1 Gew.-% DC^{®} 190, 81,98 Gew.-% Wasser.

### Beispiel 3

### Trennmittel 3:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 2 Gew.-% Dynapak^{®} Poly 190, 1 Gew.-% DC^{®} 190, 89,98 Gew.-% Wasser.

### Beispiel 4

### Trennmittel 4:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 8 Gew.-% Dynapak^{®} Poly 190, 1 Gew.-% DC^{®} 190, 83,98 Gew.-% Wasser.

Vergleichsbeispiel A:
(angelehnt an Beispiel Nr. 1 aus DE-A-40 20 036)

16 Gew.-% Polyol^{®} 130, 4 Gew.-% Unithox^{®} 450, 1 Gew.-% DC® 190, 79 Gew.-% Wasser.

### Trennmittelversuche:

Die Trennmittel wurden mittels einer 0,5 mm Düse in praxisnahen Mengen von 20 g/m² auf Testmetallplatten aufgesprüht und ein schäumbares Polyurethansystem bestehend aus 100 Teilen Desmophen^{®} PU 21IK01, 3,5 Teilen Wasser, 0,4 Teilen Tegoamin^{®} TA 33, 0,25 Teilen Tegoamin^{®} AS-1, 0,7 Teilen Diethanolamin, 0,5 Teilen Tegostab^{®} EP-K-38, 0,2 Teilen Essigsäure (60 % in Wasser), 63,5 Teilen Suprasec^{®} 2412 auf diese Platten in einer Kastenform bei 55 °C aufgeschäumt.

Nach dem Aushärten (10 Minuten) wurden die Metallplatten unter Verwendung eines Federkraftmessers vom Schaum abgezogen, um ein Maß für die Trennwirkung zu messen.

### Bewertung der Trennversuche:

| Trennmittel | Kraft zum Abziehen der Metallplatte vom Schaum [kg] | Beurteilung der Schaumoberfläche |
|---|---|---|
| 1 | 1,8 | leicht geschlossen, trocken |
| 2 | 2,0 | leicht geschlossen, trocken |
| 3 | 2,1 | leicht geschlossen, trocken |
| 4 | 2,3 | leicht geschlossen, trocken |
| A | 2,0 | leicht geschlossen, schmierig |

## Patentansprüche

1. Wässrige Dispersionen, enthaltend im Wesentlichen Wasser, trennaktive Mittel und Emulgatoren, **dadurch gekennzeichnet, dass** als trennaktive Mittel eine Kombination aus
A) mindestens einem trennaktiven Mittel, ausgesucht aus der Gruppe Seifen, Öle, Wachse und Siliconen und
B) Polyisobutylen,
verwendet wird.

2. Wässrige Dispersionen gemäß Anspruch 1, enthaltend
A) 0,5 bis 40 Gew.-% mindestens eines trennaktiven Mittels ausgesucht aus der Gruppe Seifen, Öle, Wachse und Siliconen und
B) 0,1 bis 15 Gew.-% Polyisobutylen,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 5 Gew.-% Viskositätsmodifizierer,
G) 0,1 bis 2 Gew.-% übliche Konservierungsmittel, Bakterizide, Fungizide und Antioxidantien und
H) ad 100 Gew.-% Wasser.

3. Wässrige Dispersionen gemäß einem der Ansprüche 1 oder 2, **dadurch gekennzeichnet, dass** die trennaktiven Mittel A) eine mittlere Molmasse größer als 200 aufweisen.

4. Wässrige Dispersionen gemäß mindestens einem der Ansprüche 1 bis 3, **dadurch gekennzeichnet, dass** als trennaktive Mittel A) mindestens eine Verbindung ausgesucht aus der Gruppe der flüssigen, festen, natürlichen oder synthetischen Wachse, Öle, Ester von Carbonsäuren mit Alkoholen oder Fettalkoholen, Metallseifen, Silicone, mitverwendet wird.

5. Wässrige Dispersionen gemäß mindestens einem der Ansprüche 1 bis 4, **dadurch gekennzeichnet, dass** als Polyisobutylen B) flüssiges Polyisobutylen mit einer Molmasse von 200 bis 3.000 verwendet wird.

6. Wässrige Dispersionen gemäß mindestens einem der Ansprüche 1 bis 5, **dadurch gekennzeichnet, dass** als Emulgator C) mindestens eine Verbindung ausgesucht aus der Gruppe der anionischen, kationischen, zwitterionischen und nichtionischen Tenside verwendet wird.

7. Verwendung der Trennmittel gemäß mindestens einem der Ansprüche 1 bis 6 zur Herstellung von Polyurethan-Formkörpern.

## Claims

1. Aqueous dispersion containing substantially water, agents having release activity and emulsifiers **characterized in that** a combination of
A) at least one agent having a release activity, selected from the group consisting of soaps, oils, waxes and silicones, and
B) polyisobutylene
is used as agents having release activity.

2. Aqueous dispersion according to Claim 1, containing
A) from 0.5 to 40% by weight of at least one agent having release activity, selected from the group consisting of soaps, oils, waxes and silicones, and
B) from 0.1 to 15% by weight of polyisobutylene,
C) from 0.1 to 10% by weight of emulsifiers,
D) from 0.1 to 5% by weight of catalysts,
E) from 0.1 to 5% by weight of foam stabilizers,
F) from 0.1 to 5% by weight of viscosity modifiers,
G) from 0.1 to 2% by weight of customary preservatives, bactericides, fungicides and antioxidants and
H) water to 100% by weight.

3. Aqueous dispersion according to either of claims 1 or 2, **characterized in that** the agents A) having a release activity have an average molar mass greater than 200.

4. Aqueous dispersion according to at least one of Claims 1 to 3, **characterized in that** at least one compound selected from the group consisting of the liquid, solid, natural or synthetic waxes, oils, esters of carboxylic acids with alcohols or fatty alcohols, metal soaps and silicones is concomitantly used as agents A) having a release activity.

5. Aqueous dispersion according to at least one of Claims 1 to 4, **characterized in that** the liquid polyisobutylene having a molar mass of from 200 to 3000 is used as polyisobutylene B).

6. Aqueous dispersion according to at least one of Claims 1 to 5, **characterized in that** at least one compound selected from the group consisting of the anionic, cationic, zwitterionic and nonionic surfactants is used as emulsifier C).

7. Use of the release agents according to at least one of Claims 1 to 6 for the production of polyurethane moldings.

## Revendications

1. Dispersions aqueuses, contenant essentiellement de l'eau, des agents actifs en démoulage et des émulsifiants, **caractérisées en ce qu'**on utilise, comme agent actif en démoulage, une combinaison
A) d'au moins un agent actif en démoulage, choisi dans le groupe formé par les savons, les huiles, les cires et les silicones et
B) de polyisobutylène.

2. Dispersions aqueuses selon la revendication 1, contenant
A) 0,5 à 40% en poids d'au moins un agent actif en démoulage, choisi dans le groupe formé par les savons, les huiles, les cires et les silicones et
B) 0,1 à 15% en poids de polyisobutylène,
C) 0,1 à 10% en poids d'émulsifiants,
D) 0,1 à 5% en poids de catalyseurs,
E) 0,1 à 5% en poids de stabilisateurs de mousse,
F) 0,1 à 5% en poids d'agents de modification de la viscosité,
G) 0,1 à 2% en poids de conservateurs, de bactéricides, de fongicides et d'antioxydants usuels et
H) ad 100% en poids d'eau.

3. Dispersions aqueuses selon l'une quelconque des revendications 1 ou 2, **caractérisées en ce que** les agents actifs en démoulage A) présentent une masse molaire moyenne supérieure à 200.

4. Dispersions aqueuses selon au moins l'une quelconque des revendications 1 à 3, **caractérisées en ce qu'**on utilise conjointement comme agent actif en démoulage A) au moins un composé choisi dans le groupe formé par les cires liquides, solides, naturelles ou synthétiques, les huiles, les esters d'acides carboxyliques avec des alcools ou des alcools gras, les savons métalliques, les silicones.

5. Dispersions aqueuses selon au moins l'une quelconque des revendications 1 à 4, **caractérisées en ce qu'**on utilise comme polyisobutylène B) du polyisobutylène liquide présentant une masse molaire de 200 à 3000.

6. Dispersions aqueuses selon au moins l'une quelconque des revendications 1 à 5, **caractérisées en ce qu'**on utilise comme émulsifiant C) au moins un composé choisi dans le groupe des agents tensioactifs anioniques, cationiques, zwittérioniques et non ioniques.

7. Utilisation de l'agent de démoulage selon au moins l'une quelconque des revendications 1 à 6 pour la réalisation de corps façonnés en polyuréthane.
